# EUROPEAN PATENT SPECIFICATION

(11) **EP 0 584 994 B1**
(45) Date of publication and mention of the grant of the patent: **22.01.1997**
(21) Application number: 93306284.6
(22) Date of filing: 09.08.1993
(51) Int. Cl.: F28F 9/02

(54) **Heat exchanger**
Wärmetauscher
Echangeur de chaleur

(30) Priority: 28.08.1992 US 936939
(43) Date of publication of application: 02.03.1994
(73) Proprietor: VALEO ENGINE COOLING INCORPORATED, Jamestown, New York 14701 (US)
(72) Inventor: LaVoyce Dey, Youngsville, PA 16371 (US)
(74) Representative: Irons, Mark David

(56) References cited:
- EP-A- 0 450 619
- US-A- 4 945 635
- US-A- 5 082 051

## Description

The present invention relates to heat exchanger parts and to a heat exchanger. More particularly, the heat exchanger has manifold constructions which encompass the tubular elements of the heat exchanger formed of two manifold portions.

Heat exchangers which employ two spaced header and tank constructions and wherein generally paralleled, open ended tubes interconnect the header and tank constructions and are in fluid communication with the interior of the header and tank constructions are known. Plate or serpentine fins can be disposed across the tubes between the header and tank constructions. These heat exchangers can be used in vehicular radiators and air conditioner condensers, evaporators and the like.

Structural improvements in such heat exchangers are desired to enhance the ease of manufacture and reduce the cost of manufacture and manpower while maintaining or improving durability and reliability. A round tube (1 pc) is always lighter. Lighter and more effective heat exchangers especially for vehicular radiators and air conditioners are sought after advantages.

EP-A-0450619 discloses spaced generally parallel manifold constructions, each manifold construction having an end with an end plate;
the manifold constructions comprising separate first and second manifold portions wherein each first manifold portion is mated with the respective second manifold portion;
the end plates of the manifold construction being held in place by grooves adjacent to the ends of the first and second manifold portions; and
a plurality of tubular elements extending between the manifold constructions.

The present invention seeks to provide an improved heat exchanger.

According to a first aspect of the present invention there is provided heat exchanger parts comprising spaced generally parallel manifolds each manifold comprising separate first and second manifold portions wherein the first manifold portion can be mated with the second manifold portion; a plurality of tubular elements adapted to extend between said manifolds; each manifold having an end and an end plate; the first and second manifold portions having grooves adjacent their ends for insertion therein and holding in place thereby of the end plates characterised in that each of the manifold portions has at one side thereof elongated slots, the slots of the first manifold portion corresponding to the slots of the second manifold portion so that the tubular elements can be received and encompassed by the slots.

According to a second aspect of the present invention there is provided a heat exchanger comprising spaced generally parallel manifold constructions between which extend a plurality of tubular elements, each manifold construction having an end with an end plate, the manifold constructions comprising separate first and second manifold portions wherein the first manifold portion is mated with the second manifold portion, the first and second manifold portions having grooves therein adjacent to their ends, and the end plates of the manifold construction being inserted and held in place by said grooves adjacent to the ends of the first and second manifold portions, characterised in that each of the manifold portions has at one side thereof elongated slots, the slots of the first manifold portion corresponding to the slots of the second manifold portion so that the tubular elements extending between the generally parallel manifold constructions are received and encompassed by the slots.

One of the first or second manifold portions can have at least one tab depending from a side thereof which can be bent over the other manifold portion to hold the assembly together prior to brazing.

If desired the manifold constructions can be modified to contain partitioned spaces or chambers by the insertion of at least one baffle means within the manifold construction.

The baffle means are held within the manifold construction by insertion in grooves which are formed in the inner surface of the first and second manifold portions.

The baffles and end plates are of a form or shape such that they fill the space between the manifold parts in which they are inserted.

The end plates can have spherical depressions formed in their sides which face inwardly of the manifold construction and which are primarily used for cleaning and assembly.

Embodiments of the invention are described, by way of example only, with reference to the following drawings in which:
Figure 1 shows a perspective view of the heat exchanger assembly of the present invention;
Figure 2 shows an end plate useful in the present heat exchanger assembly; and
Figure 3 shows a cross-sectional end view of a manifold construction.

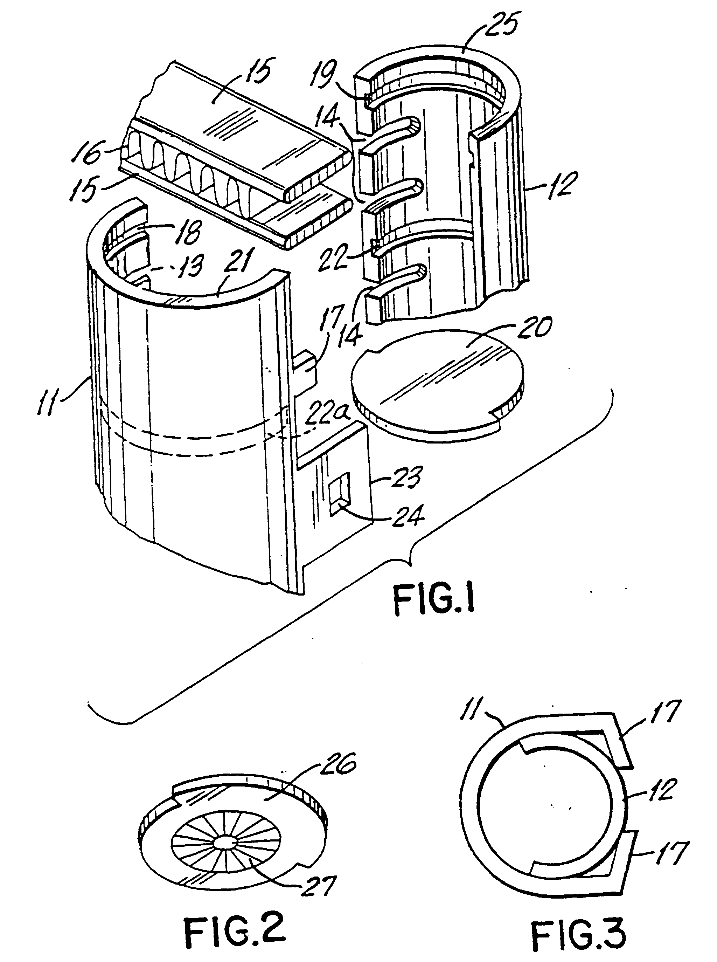

Figure 1 is a perspective view of an embodiment of the invention wherein the overall heat exchanger construction comprises a first manifold portion 11, a second manifold portion 12 and an assembly of tubular elements 15 and separators 16 as serpentine fins between the tubular elements 15. Each of the first manifold portion 11 and second manifold portion 12 has multiple tubular- element slots 13, 14. The slots 13 and 14 are so sized that the tubular elements 15 will be entirely encompassed by the slots when manifold portions 11 and 12 are mated and joined. In the embodiment shown in Fig. 1, the slot 13 in manifold portion 11 is at least one half the size of the width of a tubular element 15 and slot 14 in manifold portion 12 is greater than one half the width of tubular element 15. Slots 14 can have a lead in as seen in the figure. Adjacent the ends 21 of manifold portion 11 and ends 25 of manifold portion 12 there are provided grooves 18, 19 in the respective manifold portions 12, 11. These grooves 18, 19 are sized to accept and hold end plate 20 (or 26) of the manifold construction. If desired, grooves 22, 22A in the interior surfaces of the manifold portions 11, 12 can be provided in order to accept plates 20 (or 26) so as to form internal partitions or chambers in the manifold construction. Manifold portion 12 can also have aligning tabs. End plate 26 (Fig. 2) is an embodiment with a spherical shaped indentation which aids in cleaning of said components and handling of the flat surface items, and prevents sticking together of said components during assembly operations.

Tabs 17 are provided on manifold portion 11 which are adapted to be bent over manifold portion 12 after mating of the two portions and to hold the construction together prior to brazing. Manifold portion 11 also may have a tab 23 which can be used to attach mounting brackets (not shown). Tab 23 may have holes/slots such as 24 for the retention of brackets.

The halves which form the manifold partition portions can be blanked from a flat sheet of material and grooves for the end caps and baffles, if desired are formed. Then the halves are formed into the desired shape of the final product. In the embodiment shown in Fig. 1, the halves have been formed to the proper roundness. A preferred form of the present invention as shown in Fig. 1 is one where one of the two manifold portions is smaller than the other and the smaller manifold portion nests within the larger manifold portion and is held in place by tabs 17 as can be seen in the cross-sectional end view of Fig. 3.

The heat exchanger assembly can be constructed by placing the end plate (and baffles, if desired) into grooves in one of the manifold portions, preferably the smaller diameter manifold portion. Tubular elements and separators (15 and 16, in Fig. 1) are stacked in a manner so that the distance between the tubular elements corresponds to the distances between the slots in the manifold portions. The tubular element (separator core assembly) is placed into the slots of the manifold portions and the second manifold portion is mated with the first manifold portion to form the manifold assembly having the core assembly. The retainer tabs are then bent over to hold the entire assembly together prior to brazing.

## Claims

1. Heat exchanger parts comprising:
spaced generally parallel manifolds each manifold comprising separate first and second manifold portions (11,12) wherein the first manifold portion can be mated with the second manifold portion;
a plurality of tubular elements (15) adapted to extend between said manifolds;
each manifold having an end and an end plate (20);
the first and second manifold portions having grooves (18,19) adjacent their ends for insertion therein and holding in place thereby of the end plates characterised in that:-
each of the manifold portions (11,12) has at one side thereof elongated slots (13,14), the slots (13) of the first manifold portion (11) corresponding to the slots (14) of the second manifold portion (12) so that the tubular elements (15) can be received and encompassed by the slots.

2. Heat exchanger parts according to claim 1, wherein one of the first or second manifold portions have at least one tab (17) depending from a side thereof which can be bent over the other manifold portion.

3. Heat exchanger parts according to claim 1 or 2, wherein each manifold further comprises at least one baffle means to form partitions within the manifold.

4. Heat exchanger parts according to claim 3, wherein the manifold has further grooves in inner surfaces of the first and second manifold portions for holding the baffle means.

5. A heat exchanger comprising:
spaced generally parallel manifold constructions between which extend a plurality of tubular elements, each manifold construction having an end with an end plate (20,26), the manifold constructions comprising separate first and second manifold portions (11,12) wherein the first manifold portion is mated with the second manifold portion, the first and second manifold portions having grooves therein adjacent to their ends, and the end plates (20,26) of the manifold construction being inserted and held in place by said grooves adjacent to the ends of the first and second manifold portions, characterised in that:-
each of the manifold portions has at one side thereof elongated slots (13,14), the slots (13) of the first manifold portion (11) corresponding to the slots (14) of the second manifold portion (12) so that the tubular elements (15) extending between the generally parallel manifold constructions are received and encompassed by the slots.

6. A heat exchanger according to claim 5, wherein one of the first or second manifold portions have at least one tab (17) depending from a side thereof which is bent over the other manifold portion.

7. A heat exchanger according to claim 5 or 6, wherein the manifold construction further comprises at least one baffle means to partition the manifold construction.

8. A heat exchanger according to claim 7, wherein the inner surfaces of the first and second manifold portions have further grooves and the baffle means is held within the manifold construction by the further grooves.

## Patentansprüche

1. Wärmetauscherkomponenten, die zueinander beabstandete und im wesentlichen parallel verlaufende, separate Wasserkästen, von denen jeder erste und zweite Wasserkastenteile (11,12) aufweist - wobei sich das erste Wasserkastenteil mit dem zweiten Wasserkastenteil über Paßflächen zusammenfügen läßt - sowie mehrere röhrenförmige Elemente (15) umfassen, die sich zwischen diesen Wasserkastenteilen erstrecken können, wobei jeder Wasserkasten ein Ende sowie eine Abschlußplatte (20) aufweist und die ersten und zweiten Wasserkastenteile nahe ihren Enden mit Nuten zur Aufnahme und Fixierung der genannten Abschlußplatten ausgestattet sind, **dadurch gekennzeichnet, daß** jeder Wasserkastenteil (11,12) auf einer Seite langgestreckte Schlitze (13,14) aufweist und dabei die Schlitze (13) des ersten Wasserkastenteils (11) den Schlitzen (14) des zweiten Wasserkastenteils (12) entsprechen, so daß die röhrenförmigen Elemente (15) von diesen Schlitzen aufgenommen und umgriffen werden können.

2. Wärmetauscherkomponenten gemäß Anspruch 1, wobei entweder der erste oder der zweite Wasserkastenteil seitlich mindestens eine Lasche (17) aufweist, die sich über den anderen Wasserkastenteil umbiegen läßt.

3. Wärmetauscherkomponenten gemäß Anspruch 1 oder 2, wobei jeder Wasserkasten mindestens ein Ablenkmittel zur Herstellung von Unterteilungen innerhalb des Wasserkastens aufweist.

4. Wärmetauscherkomponenten gemäß Anspruch 3, wobei der Wasserkasten in den Innenflächen des ersten und zweiten Wasserkastenteils zusätzlich Nuten zur Fixierung der Ablenkmittel aufweist.

5. Wärmetauscher, der mehrere zueinander in einem Abstand und im wesentlichen parallel verlaufende Wasserkästen aufweist, zwischen denen sich mehrere röhrenförmige Elemente erstrecken, wobei jeder Wasserkasten ein Ende mit einer Abschlußplatte (20,26) aufweist und sich aus separaten ersten und zweiten Wasserkastenteilen (11,12) dergestalt zusammensetzt, daß sich der erste dieser Wasserkastenteile mit dem zweiten Wasserkastenteil über Paßflächen zusammenfügen läßt, und wobei diese ersten und zweiten Wasserkastenteile nahe ihrem Ende über Nuten verfügen, in denen die Abschlußplatten (20,26) des Wasserkastens nahe dem Ende des ersten und zweiten Wasserkastenteils eingesetzt und fixiert werden , **dadurch gekennzeichnet, daß** jeder Wasserkastenteil auf einer Seite langgestreckte Schlitze (13,14) aufweist und diese Schlitze (13) des ersten Wasserkastenteils (11) den Schlitzen (14) des zweiten Wasserkastenteils (12) entsprechen, so daß die röhrenförmigen Elemente (15), die sich zwischen den im wesentlichen parallel verlaufenden Wasserkästen erstrecken, von diesen Schlitzen aufgenommen und umgriffen werden.

6. Wärmetauscher gemäß Anspruch 5, wobei entweder der erste oder der zweite Wasserkastenteil seitlich mindestens eine Lasche (17) aufweist, die sich über den anderen Wasserkastenteil umbiegen läßt.

7. Wärmetauscher gemäß Anspruch 5 oder 6, wobei der Wasserkasten zudem mindestens ein Ablenkmittel zur Herstellung von Unterteilungen innerhalb des Wasserkastens aufweist.

8. Wärmetauscher 7, wobei die Innenflächen der ersten und zweiten Wasserkastenteils zusätzliche Nuten aufweisen und das Ablenkmittel durch diese zusätzlichen Nuten innerhalb des Wasserkastens fixiert wird.

## Revendications

1. Pièces pour échangeur de chaleur, comprenant :
- des boîtes collectrices disposés parallèlement de manière générale et espacés, chaque boîte collectrice comprenant une première et une seconde parties (11, 12) séparées de la boîte collectrice, la première partie de la boite collectrice pouvant être accolée avec la seconde partie de la boîte collectrice ;
- une pluralité d'éléments tubulaires (15) adaptés pour s'étendre entre lesdites boîtes collectrices ;
- chaque boîte collectrice comportant une extrémité et une plaque d'extrémité (20) ;
- les première et seconde parties de la boîte collectrice comportant des rainures (18, 19) qui sont adjacentes à leurs extrémités et sont destinées à l'insertion dans celles-ci et au maintien en place par celles-ci des plaques d'extrémité, caractérisées en ce que :
- chacune des parties de la boîte collectrice (11, 12) comporte, à l'un de ses côtés, des fentes allongées (13, 14), les fentes (13) de la première partie de la boîte collectrice (11) étant en correspondance avec les fentes (14) de la seconde partie de la boîte collectrice (12) de telle manière que les éléments tubulaires (15) puissent être reçues et contenus dans les fentes.

2. Pièces pour échangeur de chaleur selon la revendication 1, dans lesquelles une parmi la première et la seconde parties de la boîte collectrice comporte au moins une patte (17) qui est rattachée à un de ses côtés et peut être repliée sur l'autre partie de la boîte collectrice.

3. Pièces pour échangeur de chaleur selon la revendication 1 ou 2, dans lesquelles chaque boîte collectrice comprend au moins un organe formant cloison destiné à créer des cloisonnements dans la boîte collectrice.

4. Pièces pour échangeur de chaleur selon la revendication 3, dans lesquelles la boîte collectrice comporte des rainures supplémentaires aménagées dans les faces intérieures des première et seconde parties de la boîte collectrice et destinées à maintenir l'organe formant cloison.

5. Echangeur de chaleur comprenant :
- des structures de la boîte collectrice disposées parallèlement de manière générale et espacées entre lesquelles s'étendent une pluralité d'éléments tubulaires, chaque structure de la boîte collectrice comportant une extrémité munie d'une plaque d'extrémité (20, 26), les structures de la boîte collectrice comprenant une première et une seconde parties (11, 12) séparées de la boîte collectrice, dans lequel la première partie de la boîte collectrice est accolée avec la seconde partie de la boîte collectrice, les première et seconde parties de la boîte collectrice comportant des rainures intérieures adjacentes à leurs extrémités et les plaques d'extrémité (20, 26) de la structure de la boîte collectrice étant insérées et maintenues en place par lesdites rainures adjacentes aux extrémités des première et seconde parties de la boîte collectrice, caractérisé en ce que :
- chacune des parties de la boîte collectrice comporte, à l'un de ses côtés, des fentes allongées (13, 14), les fentes (13) de la première partie de la boîte collectrice (11) étant en correspondance avec les fentes (14) de la seconde partie de la boîte collectrice (1) de telle manière que les éléments tubulaires (15) puissent être reçus et contenus dans les fentes.

6. Echangeur de chaleur selon la revendication 5, dans lequel une parmi la première et la seconde parties de la boite collectrice comporte au moins une patte (17) qui est rattachée à un de ses côtés et est repliée sur l'autre partie de la boite collectrice.

7. Echangeur de chaleur selon la revendication 5 ou 6, dans lequel la structure de la boîte collectrice comprend en outre au moins un organe formant cloison destiné à créer des cloisonnements dans la structure de la boîte collectrice.

8. Echangeur de chaleur selon la revendication 7, dans lequel des faces intérieures des première et seconde parties de la boîte collectrice comportent des rainures supplémentaires et l'organe formant cloison est maintenu à l'intérieur de la structure de la boîte collectrice au moyen des rainures supplémentaires.
